# EUROPEAN PATENT APPLICATION

(11) **EP 1 911 623 A2**
(43) Date of publication of application: **16.04.2008**
(21) Application number: 07019159.8
(22) Date of filing: 28.09.2007
(51) Int. Cl.: B60K 37/06

(54) **Vehicular multifunction control system**

(30) Priority: 11.10.2006 US 548306
(71) Applicant: GM Global Technology Operations, Inc., Detroit, MI 48265-3000 (US)
(72) Inventor: Lenneman, John K., Okemos, Michigan 48864 (US); Szczerba, Joseph F., Grand Blanc, Michigan 48439 (US); Mathieu, Roy J., Rochester Hills Michigan 48307 (US); Neish, Branden G., Shelby Township Michigan 48317 (US); Geisler, Scott P., Clarkston, Michigan 48348 (US); Repa, Brian S., Beverly Hills Michigan 48025 (US)
(74) Representative: Manitz, Finsterwald & Partner GbR

(57) **Abstract**

A control system for a vehicle with a plurality of selectively variable characteristics includes a mode selector input device (14C) and a characteristic adjustment input device (14A,14B,14D,14E). Manipulation of the mode selector input device causes the control system to alternate between first and second modes of operation. In the first mode of operation, manipulation of the characteristic adjustment input device causes a first variable characteristic to change. In the second mode of operation, manipulation of the characteristic adjustment input device causes a second variable characteristic to change. The control system thus enables a single input device to control multiple characteristics or multiple vehicle systems, which enables a corresponding reduction in the quantity of input devices in a vehicle passenger compartment.

## Description

### TECHNICAL FIELD

The present invention pertains generally to vehicular multifunction control systems.

### BACKGROUND OF THE INVENTION

A motor vehicle typically includes a multitude of components and systems that enhance the comfort and convenience of the driver and passengers. Such systems include, for example, audio systems having a radio, speakers, compact disc player, and cassette player; climate systems having heating, ventilation, and air conditioning components; navigational systems; etc.

Each of the systems typically includes an interface through which the driver of the vehicle can interact with the system. For example, control of a system requires that the driver of the vehicle input command information via the interface to which the system is responsive to vary a system characteristic. Each system may also supply information to the driver via the interface. For example, an audio system will indicate the radio station to which it is tuned, a climate control system will indicate the fan speed or the thermostat setting, and a navigational system will indicate location information.

Each system typically includes its own dedicated interface. Thus, for example, a climate control system includes a plurality of switches, buttons, dials, etc. that are operable to control only the climate control system. Similarly, an audio system includes a plurality of switches, buttons, dials, etc. that are operable only to control the audio system.

### SUMMARY OF THE INVENTION

A multifunction control system is provided for a vehicle having a plurality of variable characteristics. The control system includes two input devices, i.e., a mode selector input device and a characteristic adjustment input device. The control system is configured such that manipulation of the mode selector input device causes, at least in part, the control system to alternate between at least two modes of operation, including a first mode and a second mode. In the first mode of operation, the characteristic adjustment input device is manipulable by a driver or passenger to alter a first variable characteristic. In the second mode, the characteristic adjustment input device is manipulable by the driver or passenger to alter a second variable characteristic.

In accordance with various embodiments, the selector input device and/or the characteristic adjustment input device may include switches, touchpad devices, force sensing devices, proximity sensing devices, motion sensing devices, sliders, rockers, knobs or any other known input devices.

Examples of vehicle systems include a climate system having variable characteristics such as air temperature, fan speed, and air flow mode; an audio system having variable characteristics such as radio tuner frequency, speaker volume, compact disc track playing; etc.

The control system preferably further includes a display defining multiple regions that are configured to visually indicate the status of the plurality of variable characteristics. The selector input device and the characteristic adjustment input device are preferably one-to-one mapped with the display such that the regions of the display have a predetermined spatial relationship with one another, and the input devices have substantially the same spatial relationship with one another.

The above features and advantages and other features and advantages of the present invention are readily apparent from the following detailed description of the best modes for carrying out the invention when taken in connection with the accompanying drawings.

### BRIEF DESCRIPTION OF THE DRAWINGS

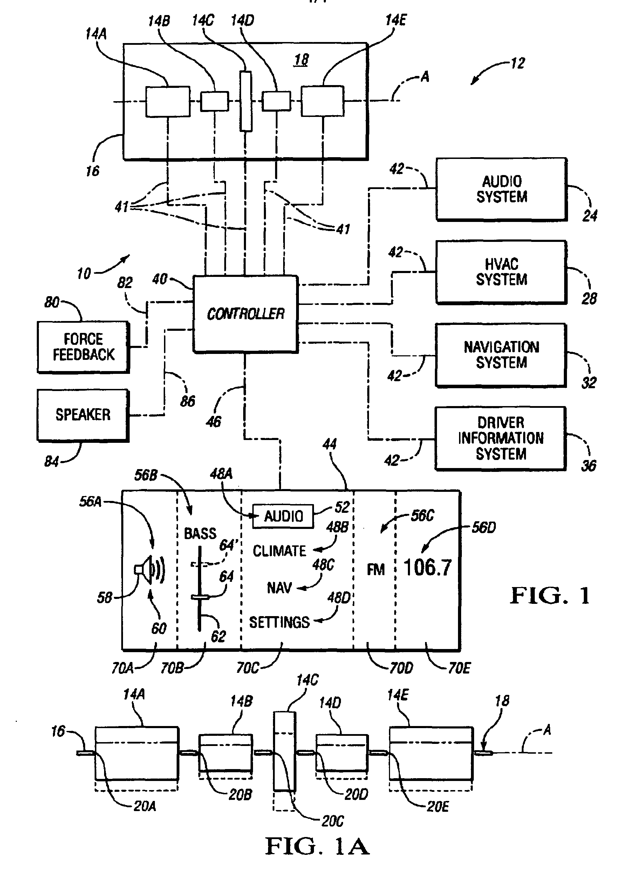

FIGURE 1 is a schematic depiction of a vehicle with vehicular systems and a control system with a plurality of input devices and a display for controlling the vehicular systems; and

FIGURE 1A is a schematic elevational view of the input devices of Figure 1 in accordance with the preferred embodiment.

### DESCRIPTION OF THE PREFERRED EMBODIMENTS

Referring to Figure 1, a multifunction control system 10 for a vehicle 12 is schematically depicted. The control system 10 includes a plurality of input devices 14A-E. The input devices 14A-E will initially be described as barrel switches 14A-E in accordance with the preferred embodiment, and will thereafter be described as including other known devices in accordance with a plurality of alternate embodiments.

According to the preferred embodiment, the barrel switches 14A-E have a common axis of symmetry A. Switches 14A-E are generally circular in cross-section in a plane that is perpendicular to axis A. The switches 14A-E may have differing radial dimensions to provide a tactile distinguishing feature and thus facilitate a driver's ability to distinguish the switches. In an exemplary embodiment, the central switch 14C is about 50 millimeters in diameter. End switches 14A, 14E are about 30 millimeters in diameter. Switches 14B, 14D are about 20 millimeters in diameter.

Similarly, the switches 14A-E may also have differing axial lengths, with the central switch 14C having a length of about 10 millimeters, end switches 14A, 14E having a length of about 25 millimeters, and switches 14B, 14D having a length of about 20 millimeters. Approximately 5 millimeters separates adjacent switches. The switches 14A-E are preferably located on a center console between a driver's seat and a passenger's seat, on an instrument panel, or on a steering wheel. The switches 14A-E may also include different surface textures to facilitate a driver's ability to distinguish them. For example, the switches may be coated with different materials, or have different surface features such as ridges, bumps, etc.

Referring to Figures 1 and 1A, a switch plate 16 defines a surface 18 that is exposed to the passenger compartment of vehicle 12. The switch plate 16 defines a plurality of apertures 20A-E. Each of switches 14A-E extends through a respective one of the apertures 20A-E such that at least a portion of each switch protrudes from surface 18 so as to be manipulable by a vehicle occupant to cause rotation about axis A. Each barrel switch 14A-E is freely and independently rotatable about axis A. The switches 14A-E may also be characterized by different haptic feedback characteristics, i.e., variations in resistance to rotation caused by springs, detents, feedback motors, etc. In a preferred embodiment, each switch 14A-E is also selectively and independently depressible to a depressed position shown in phantom in Figure 1A. The scroll wheel sometimes found on a computer mouse is an exemplary cylindrical barrel switch that is rotatable and depressible.

Referring specifically to Figure 1, the vehicle 12 includes an audio system 24, a climate system 28, a navigation system 32, and a driver information system 36. In an exemplary embodiment, the audio system 24 includes a radio, tape player, compact disk player, and speakers. In an exemplary embodiment, the climate system 28 includes an air conditioner for providing cooled air, a heater for providing heated air, and ducts and vents for providing the heated or cooled air to the vehicle passenger compartment (not shown). The ducts are configured to selectively provide air to a first set of vents below an instrument panel, to a second set of vents formed inside the instrument panel and positioned to direct air generally rearward, and a third set of vents formed in the instrument panel and positioned to direct air to a windshield for use in defrosting, as understood by those skilled in the art. Each of systems 24, 28, 32, 36 has a plurality of selectively variable system characteristics.

The control system 10 includes a controller 40 operatively connected to the switches 14A-E. The switches 14A-E are configured to generate signals 41 when rotated or depressed. The signals 41 are transmitted to the controller 40, such as by wires, flexible circuit boards, etc. The controller 40 is configured to transmit control signals 42 to the climate control system 28, the audio system 24, the navigation system 32, and the driver information system 36 so that the control system 10 functions as described herein. Systems 24, 28, 32, 36 are responsive to signals 42 by varying or altering one or more system or component characteristics.

The controller 40 is programmed and configured to provide the control system 10 with four modes of operation. In a first mode of operation, each of switches 14A, 14B, 14D, 14E is manipulable to alter a respective variable characteristic of the audio system 24. In a second mode of operation, each of switches 14A, 14B, 14D, 14E is manipulable to alter a respective variable characteristic of the climate system 28. In a third mode of operation, each of switches 14A, 14B, 14D, 14E is manipulable to alter a respective variable characteristic of the navigation system 32. In a fourth mode of operation, each of switches 14A, 14B, 14D, 14E is manipulable to alter a respective variable characteristic of the driver information system 36. Switches 14A, 14B, 14D, 14E are thus "characteristic adjustment switches."

In the context of the present invention, manipulation of a switch "enables the variation" or "causes the variation" of a variable characteristic if the manipulation, either by itself or in conjunction with another action, causes a change in the variable characteristic. Thus, for example, and within the scope of the claimed invention, rotation of a switch 14A-E enables or causes the variation of a variable characteristic if the control system 10 causes the characteristic to change automatically upon the rotation. Similarly, and within the scope of the claimed invention, rotation of a switch 14A-E enables or causes the variation of a variable characteristic if the control system 10 causes the characteristic to change upon the rotation and an additional input by the driver, such as depressing the switch.

The controller 40 is configured such that rotation of the central switch 14C causes the control system 10 to alternate between the first, second, third, and fourth modes of operation, and thus switch 14C is referred to herein as a "mode selector switch" or a "mode selector input device". The controller 40 is also configured such that rotation of the switches 14A, 14B, 14D and 14E causes the control system 10 to adjust some variable characteristic of the selected mode, and thus the switches 14A, 14B, 14D and 14E are referred to herein as "characteristic adjustment switches" or "characteristic adjustment input devices".

The control system 10 also includes a display 44 sufficiently located within the vehicle 12 for viewing by a driver or passenger. Exemplary display 44 locations include the vehicle instrument panel, gage cluster, heads-up display, base of windshield, A-pillar, etc. The controller 40 is configured to transmit signals 46 to the display 44 to control the display 44 so that the display functions as described herein.

The display 44 is configured to selectively depict indicia representing the current state of the control system 10 and variable system characteristics. More specifically, the controller 40 is configured to cause the display 44 to depict a plurality of icons. Each icon is a symbol that is representative of a vehicle component or system, or representative of a variable characteristic of a vehicle component or system. The icons, which may also be referred to herein as "indicia," may include alphanumeric characters, graphs, lists, etc., within the scope of the claimed invention.

The display 44 provides information to the driver about the vehicle systems, and provides visual feedback of switch 14A-E manipulation. Four icons 48A-D are depicted on the display 44. Icon 48A represents the audio system 24, icon 48B represents the climate system 28, icon 48C represents the navigational system 32, and icon 48D represents the driver information system 36.

The appearance of icons 48A-D is responsive to rotation of switch 14C to indicate in which of the four modes the control system 10 is operating, or will be operating upon the occurrence of an additional input by the driver, such as the depression of switch 14C.

More specifically, the controller 40 is configured to change the appearance of the icon representing the system that is presently controllable by manipulation of switches 14A, 14B, 14D, 14E. In the embodiment depicted, the icon representing the system selected for control includes a box 52. Those skilled in the art will recognize other means of changing the appearance of an icon that may be employed within the scope of the claimed invention, such as changing the size of the icon, changing the color of the icon, etc.

In Figure 1, icon 48A includes box 52 to indicate that the control system 10 is in the first mode of operation wherein the manipulation of switches 14A-B and 14D-E enables variation in audio system 24 characteristics. Accordingly, the display 44 depicts a first set of icons 56A-D, each indicating the present status of a respective audio system characteristic, or what the status will be after an additional input by the driver. Icon 56A includes a schematic depiction of a speaker 58 with curvilinear lines 60 adjacent thereto, and represents the speaker volume. Icon 56B includes a line 62 and a bar 64 intersecting, and perpendicular to, the line 62; icon 56B represents audial characteristics of the speakers, which, in Figure 1, is the bass level. Icon 56C is an alphanumeric representation of the general source from which the audio system 24 is receiving audial content, which, in Figure 1, is the FM (frequency modulation) band. Icon 56D is an alphanumeric representation of the specific source from which the audio system 24 is receiving audial content, which, in Figure 1, is the FM frequency to which the radio of the audio system 24 is tuned.

The icons 56A, 56B, 48A-D, 56C, and 56D are located within specific regions of the display 44. More precisely, the icon 56A is located within a first region 70A of the display 44, the icon 56B is located within a second region 70B of the display 44, the icons 48A-48D are located within a third region 70C of the display 44, the icon 56C is located within a fourth region 70D of the display 44, and the icon 56D is located within a fifth region 70E of the display 44. The regions 70A-70E are shown as being generally columnar, however, other region configurations may be envisioned.

The present invention preferably implements one-to-one mapping. As is known in the art, one-to-one mapping ties the spatial relationship of the switches 14A-E together with the spatial relationship of the display regions 70A-70E. As an example, the operation of the left most switch 14A controls information located in the left most display region 70A (i.e., the icon 56A), the operation of the middle switch 14C controls information in the middle display region 70C (i.e., the icons 48A-48D), and the operation of the right most switch 14E controls information in the right most display region 70E (i.e., the icon 56D). Accordingly, the switches 14A-E and the display regions 70A-70E have a corresponding alignment such that respective elements are arranged in a similar sequence or pattern.

As previously described, visual feedback from the display 44 is preferably implemented to acknowledge the manipulation of a switch 14A-E and/or to indicate the status of the systems 24, 28, 32 and 36; however, it should be appreciated that other types sensory feedback may be implemented as well. As an example, a force feedback device 80 may be implemented to tactilely acknowledge the manipulation of a switch 14A-E and/or to indicate the status of the systems 24, 28, 32 and 36. The force feedback device 80 is operatively connected to the controller 40 such that the force feedback device 80 generates tactile feedback in response to a command signal 82 from the controller 40. As is known in the art, a "force feedback device" applies a force or series of forces to physically engage the operator as a means of conveying information or feedback. The force feedback device 80 may be incorporated directly into the switches 14A-E or any other vehicle component. Therefore, as an example, if an operator actuates a switch 14A-E to adjust the seat position, a force feedback device 80 disposed in the seat may vibrate to acknowledge the command.

Auditory feedback may also be implemented to acknowledge the manipulation of a switch 14A-E and/or to indicate the status of the systems 24, 28, 32 and 36. Therefore, a speaker 84 may be operatively connected to the controller 40 such that the speaker 84 generates auditory feedback in response to a command signal 86 from the controller 40. The speaker 84 may be incorporated into the display 44 or into any other vehicle component. Some examples of auditory feedback from the speaker 84 may include, for example, any type of sound, speech, or directional sound cues to indicate a specific region of the vehicle 12 being controlled.

According to an alternate embodiment of the present invention, the input devices 14A-E previously described as being barrel switches may include other types of devices. As an example, the input devices 14A-E may include devices configured to change data without moving such as a touchpad, a force sensor, a proximity sensor, or a motion sensor adapted to identify different types of finger gestures. Alternatively, the input devices 14A-E may include sliders, rockers, toggles, joysticks, knobs, or any other known input devices. As was the case with the preferred barrel switches, the input devices 14A-E in accordance with the alternate embodiments are each preferably dimensioned to provide a tactile distinguishing feature and thus facilitate a driver's ability to distinguish the input devices 14A-E from each other. According to another alternate embodiment, the orientation or location of the input devices 14A-E may be adjustable such as an apparatus which is removable from its primary position to function as a remote control.

While the best modes for carrying out the invention have been described in detail, those familiar with the art to which this invention relates will recognize various alternative designs and embodiments for practicing the invention within the scope of the appended claims.

## Claims

1. A control system for a vehicle having first and second variable characteristics, the control system comprising:
a mode selector input device; a characteristic adjustment input device; and a controller operatively connected to the mode selector input device and the characteristic adjustment input device;
wherein the mode selector input device is selectively manipulable to cause the controller to alternate between first and second modes of operation; wherein the controller is configured to alter the first variable characteristic in response to manipulation of the characteristic adjustment input device in the first mode; and wherein the controller is configured to alter the second variable characteristic in response to manipulation of the characteristic adjustment input device in the second mode.

2. The control system of claim 1, wherein the mode selector input device and the characteristic adjustment input device are touchpad devices.

3. The control system of claim 1, wherein the mode selector input device and the characteristic adjustment input device are each one of a force sensing device, a proximity sensing device, and a motion sensing device.

4. The control system of claim 1, wherein the mode selector input device and the characteristic adjustment input device are each one of a slider, a rocker, and a knob.

5. The control system of claim 1, further comprising a display operatively connected to the controller; and wherein the controller is configured to cause the display to depict a first icon in the first mode, and a second icon in the second mode.

6. The control system of claim 1, wherein the display includes a plurality of regions having a spatial relationship with one another, and wherein the mode selector input device and the characteristic adjustment input device have substantially the same spatial relationship with each other.

7. The control system of claim 1, further comprising a force feedback device configured to provide tactile feedback in response to the manipulation of the mode selector input device or the characteristic adjustment input device.

8. The control system of claim 1, further comprising a device configured to provide auditory feedback to indicate the status of the first and second variable characteristics.

9. A vehicle comprising:
at least one vehicle system having first, second, third, and fourth variable characteristics; and
a mode selector input device; a first characteristic adjustment input device; a second characteristic adjustment input device; and a controller operatively connected to the mode selector input device; the first characteristic adjustment input device; and the second characteristic adjustment input device;
wherein the mode selector input device is selectively manipulable to cause the controller to alternate between first and second modes of operation;
wherein the vehicle is configured such that, in the first mode, manipulation of the first characteristic adjustment input device causes variation of the first variable characteristic and manipulation of the second characteristic adjustment input device causes variation of the second variable characteristic; and wherein, in the second mode, manipulation of the first characteristic adjustment input device causes variation of the third variable characteristic and manipulation of the second characteristic adjustment input device causes variation of the fourth variable characteristic.

10. The vehicle of claim 9, wherein the mode selector input device, the first characteristic adjustment input device, and the second characteristic adjustment input device are touchpad devices.

11. The vehicle of claim 9, wherein the mode selector input device, the first characteristic adjustment input device, and the second characteristic adjustment input device are each one of a force sensing device, a proximity sensing device, and a motion sensing device.

12. The vehicle of claim 9, wherein the mode selector input device, the first characteristic adjustment input device, and the second characteristic adjustment input device are each one of a slider, a rocker, and a knob.

13. The vehicle of claim 9, further comprising a display operatively connected to the controller; and wherein the controller is configured to cause the display to depict a first icon in the first mode, and a second icon in the second mode.

14. The vehicle of claim 9, further comprising a device configured to provide auditory feedback to indicate the status of the first, second, third, and fourth variable characteristics.

15. A vehicle comprising:
at least one vehicle system having a plurality of variable characteristics;
a plurality of adjacently disposed input devices configured such that each pair of adjacent input devices are dimensioned differently from each other in order to provide a tactile distinguishing feature; and
a display operatively connected to each of the plurality of input devices, said display defining a plurality of regions configured to visually indicate the status of the plurality of variable characteristics;
wherein manipulation of the plurality of input device causes variation of the variable characteristics;
wherein the plurality of input devices are one-to-one mapped with the display such that the regions of the display have a predetermined spatial relationship with one another, and wherein the plurality of input devices have substantially the same spatial relationship with one another.

16. The vehicle of claim 15, wherein said plurality of adjacently disposed input devices are barrel switches.

17. The vehicle of claim 15, wherein said plurality of adjacently disposed input devices are touchpad devices.

18. The vehicle of claim 15, wherein said plurality of adjacently disposed input devices include one of a force sensing device, a proximity sensing device, and a motion sensing device.

19. The vehicle of claim 15, wherein said plurality of adjacently disposed input devices include one of a slider, a rocker, and a knob.

20. The vehicle of claim 15, further comprising a device configured to provide auditory feedback to indicate the status of the plurality of variable characteristics and to acknowledge the manipulation of the plurality of adjacently disposed input devices.
